# EUROPEAN PATENT APPLICATION

(11) **EP 2 018 031 A1**
(43) Date of publication of application: **21.01.2009**
(21) Application number: 08275032.4
(22) Date of filing: 16.07.2008
(51) Int. Cl.: H04M 1/2745, H04M 1/253, H04M 1/26, H04M 1/56

(54) **Communication trigger system and method**

(30) Priority: 16.07.2007 GB 0713784
(71) Applicant: Cellcrypt Limited, Woking Surrey GU21 6BY (GB)
(72) Inventor: Poppe, Tobias, Woking Surrey GU21 6BY (GB)
(74) Representative: Exell, Jonathan Mark

(57) **Abstract**

A communication trigger system and method are disclosed. A communications device (10) is monitored for predetermined identifiers input or selected on a communications device during actuation of a communication function and, upon detection of a predetermined identifier, a non-default communication function is initiated on the communications device.

## Description

### Field of the Invention

The present invention relates to a method and system for triggering an action within communication system.

### Background to the Invention

A key requirement for communication devices such as mobile telephones is that they are user friendly and intuitive. Most people will not read a user manual or attempt to use help functions on the device. If it is not immediately apparent how to use a function, most people simply will not use it. Similarly, if it is a lot of hassle to navigate to a function within a user interface it will often be ignored or irregularly used due to the inconvenience of the steps needed to access it.

Many communication devices produced are now capable of providing different communications mechanisms to users. For example, mobile telephones all offer the ability to call over a GSM or similar communications network and this is the default (and indeed expected) function of a mobile telephone.

However, many devices also offer VOIP functionality that route communications over the internet instead of a GSM network. Additionally, various software based applications can now be downloaded onto mobile telephones to offer other calling functionality such as encrypted communications.

Whilst these additional functions are particularly useful, they must each be accessed via their respective application resident on the mobile telephone before they can be used. In most cases, this means that the majority of users will not be able, or will not be willing, to find these within their mobile phone and will ignore this functionality.

Whilst some mobile telephone manufacturers are now providing additional hardware keys or software shortcut keys that can be assigned to functions and applications such as these, each manufacturer is different and provides a different way of doing this. It also means that the user still needs to know how to access the hard/soft key and, in many cases, how to assign the desired function to that key.

### Statement of Invention

According to an aspect of the present invention, there is provided a communication trigger system arranged to monitor identifiers input or selected on a communications device and initiate a non-default communication function on the communications device upon detection of at least a predetermined portion of an identifier, said predetermined portion being associated with said non-default communication function.

In a preferred embodiment, a communication trigger system or a subsystem of a mobile telephony device monitors a telephone number/identifier dialled (or selected from an address book) on the device and initiates the a non-standard function such as a call using a non-default communication function, a call or an internet connection over an alternate communications network or the like if the number/identifier dialled includes (and preferably is prefixed by) a predetermined code which is associated with the non-default communication function.

For example, a code of *1* may be associated with a VOIP client on the device. When a number prefixed with *1* is dialled, instead of calling the number over the standard telephone network that the device normally uses, a call request is instead routed to the VOIP client to place the call using its functionality (which may or may not use the standard telephone network).

In another example, a code of #2# may be associated with an alternate communications network for the normal telephony operation. As such, when a number is dialled using that prefix, the communication trigger system intercepts the telephony function and causes the telephony application on the phone to use the alternate network (which may be another GSM carrier, an IP network, some form of encrypted carrier etc).

Preferably, the predetermined code is stripped from the number dialled before being passed to the non-default communication function.

In preferred embodiments of the present invention, each of a number of non-default communication functions such as VOIP and encrypted calling are associated with a different prefix. When that prefix is used during dialling, the corresponding application is started on the mobile phone and a call is triggered to the dialled number using that application. The user does not need to start the application or have any special hard or soft keys associated with the application on the mobile device.
In the case of VOIP, a "number" is not necessarily dialled. It may be that a user identifier is preceded with a call prefix - the prefix triggers use of an alternate communications network via which the user identifier is connected.

In preferred embodiments of the present invention, the entire dial process is analyzed/intercepted/monitored. For example, you have a phone number entry of 88812345 in your phone contact database and the application triggers on the prefix 888. If the phone entry is dialled from the contact database (which happens without actually entering the number via the keypad) also then embodiments of the present invention trigger an action based on the prefix).
A communication trigger system arranged to monitor for predetermined identifiers input or selected on a communications device during actuation of a communication function and, upon detection of a predetermined identifier, initiate a non-default communication function on the communications device.

The identifier preferably includes, is linked to or is associated with an identifier of a party to be called.

The non-default communication function may comprise an application on the communications device, the communication trigger system being arranged to pass the identifier of the party to be called to the application.

The communication trigger system is preferably arranged to start the application if it is not already running.

The communications device may be arranged to communicate via a number of different communications types including a default communications type, the non-default communication function including selection of a different one of the communications types to the default communications type.

The communications types may include at least selected ones of: connection types, protocol types and communication networks.

The communications types may include communication properties.

The communication properties may include quality of service and/or encryption parameters.

The or each identifier is preferably associated with an addressing mechanism of a party to be called and comprises one or more of selected ones of: a prefix, a postfix, a tag, a non-standard protocol identifier.

The addressing mechanism may comprise a telephone number.

The addressing mechanism may comprise a URL or other network identifier.

The addressing mechanism may comprise an address book entry on the communications device.

According to another aspect of the present invention, there is provided a communication trigger method comprising:
Monitoring a communications device for predetermined identifiers input or selected during actuation of a communication function; and,
upon detection of a predetermined identifier, initiating a non-default communication function on the communications device.

The method preferably further comprises:
associating each of a plurality of non-default communication functions with a different one of a plurality of predetermined identifiers; and,
initiating the non-default communication function upon detection of the respective associated predetermined identifier.

The step of monitoring preferably comprises monitoring data input into said communications device, said data designating a party to be called input.

The monitoring step may include monitoring for selection of an entry from an electronic address book.

If more than one identifier is associated with the selected entry, the method may further comprise:
prompting selection of one of the identifiers associated with the selected entry; and,
initiating the non-default communication function associated with the selected identifier.

The identifier may include an identifier of a party to be called and the non-default communication function comprises an application on the communications device, the method further comprising passing the identifier of the party to be called to the application.

The method may further comprise checking the status of the application and running the application if it is not already running.

According to another aspect of the present invention, there is provided a computer readable carrier encoding a computer program, the computer program comprising:
computer program code for monitoring a communications device for predetermined identifiers input or selected during actuation of a communication function; and,
computer program code for detecting a predetermined identifier and initiating a non-default communication function on the communications device.

### Brief Description of the Drawings

An embodiment of the present invention will now be described by way of example only, with reference to the accompanying drawings, in which:

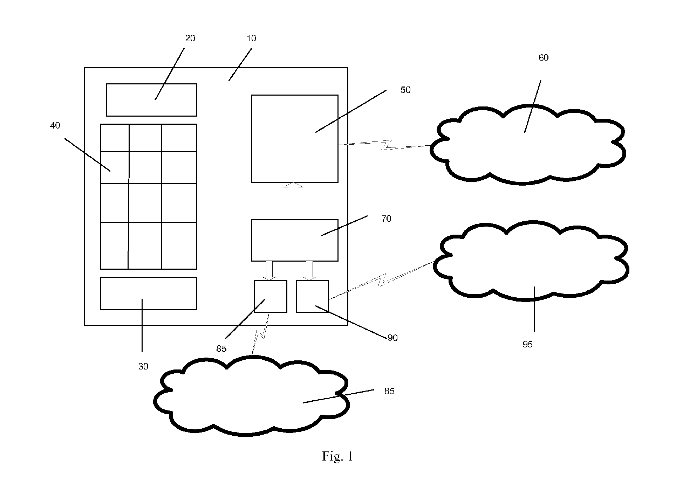

Figure 1 is a schematic diagram of a mobile telephone incorporating a communication trigger system according to an aspect of the present invention.

### Detailed Description

Figure 1 is a schematic diagram of a mobile telephone incorporating a communication trigger system according to an aspect of the present invention.

The mobile telephone 10 includes a microphone 20, a speaker 30, a keypad 40 and a call processing system 50.

The call processing system 50 is arranged to communicate on demand with a default communications network 60. For example, if the user enters 01234 567890 via the keypad 40, the call processing system 50 attempts to connect to this number via the default communications network 60.

The mobile telephone 10 also includes a communication trigger system 70 that may be implemented in hardware, software, firmware or any combination of these. It may be a separate component of the communication device or part of another system or subsystem or indeed a background application loaded on the device.

The communication trigger system 70 is arranged to monitor the call processing system 50. The communication trigger system 70 monitors numbers entered via the keypad 40 and, if it starts or is otherwise tagged with one of a predetermined number of codes, the communication trigger system 70 intercepts the called number, removes the code, and takes action needed to initiate a call via one of a number of alternate communications systems 80, 90. The action may be dialing the number entered, connecting a VOIP session to an entered user identifier etc.

For example, the alternate communications systems 80, 90 may include a Voice over IP network 80 and an encrypted call system 90. The alternate communication system 80, 90 may or may not use the default communications network 60. It may instead use the internet 85 or an alternate communications network 95.

In use, a user simply dials a slightly different number to call via VOIP etc.

The mobile telephone may offer additional address book entries to accommodate these different numbers to the same individual. In use, if a user selects a contact entry which also has a number with a prefix/tag, the user is given the choice which number to dial. If the number with the prefix/tag is dialled, an application executes to enable use of the alternate communications network.

Although the above description has focussed on mobile telephones, it will be appreciated that the present invention is suitable for use in any communication device capable of having non-default functionality. For example, it can be envisaged that embodiments could be produced for portable digital organisers, smartphones, conventional wired phones, VOIP based systems both on computers and on separate hardware.

## Claims

1. A communication trigger system arranged to monitor for predetermined identifiers input or selected on a communications device during actuation of a communication function and, upon detection of a predetermined identifier, initiate a non-default communication function on the communications device.

2. A communication trigger system according to claim 1, wherein the identifier includes an identifier of a party to be called.

3. A communication trigger system according to claim 2, wherein the non-default communication function comprises an application on the communications device, the communication trigger system being arranged to pass the identifier of the party to be called to the application.

4. A communications trigger system according to claim 3, wherein the communication trigger system is arranged to start the application if it is not already running.

5. A communications trigger system according to any preceding claim, wherein the communications device is arranged to communicate via a number of different communications types including a default communications type, the non-default communication function including selection of a different one of the communications types to the default communications type.

6. A communications trigger system according to claim 5, wherein the communications types include at least selected ones of: connection types, protocol types and communication networks.

7. A communications trigger system according to claim 5 or 6, wherein the communications types include communication properties.

8. A communications trigger system according to claim 7, wherein the communication properties include quality of service and/or encryption.

9. A communications trigger system according to any preceding claim, wherein the or each identifier is associated with an addressing mechanism of a party to be called and comprises one or more of selected ones of: a prefix, a postfix, a tag, a non-standard protocol identifier.

10. A communications trigger system according to claim 9, wherein the addressing mechanism comprises a telephone number.

11. A communications trigger system according to claim 10, wherein the addressing mechanism comprises a URL or other network identifier.

12. A communications trigger system according to claim 9, 10 or 11, wherein the addressing mechanism comprises an address book entry on the communications device.

13. A communication trigger method comprising:
Monitoring a communications device for predetermined identifiers input or selected during actuation of a communication function; and,
upon detection of a predetermined identifier, initiating a non-default communication function on the communications device.

14. A computer program comprising computer program code for performing all of the steps of claim 13 when said program is run on a computer.

15. A computer program as claimed in claim 14 embodied on a computer readable medium.
